# EUROPÄISCHE PATENTANMELDUNG

(11) **EP 1 655 888 A1**
(43) Veröffentlichungstag der Anmeldung: **10.05.2006**
(21) Anmeldenummer: 04026395.6
(22) Anmeldetag: 06.11.2004
(51) Int. Cl.: H04L 12/14, H04L 12/28

(54) **Verfahren und System zur Identifizierung eines Teilnehmers und des benutzten Anschlusses bei VoIP-Verbindungen**

(71) Anmelder: TECON Technologies AG, 50676 Köln (DE)
(72) Erfinder: Fröhlich, Horst, 51674 Wiehl (DE)
(74) Vertreter: Durm, Frank

(57) **Zusammenfassung**

Die Erfindung betrifft ein Verfahren und ein System zur Identifizierung eines registrierten Teilnehmers und des vom Teilnehmer benutzten physikalischen Anschlusses (1) bei der Nutzung von Telekommunikationsverbindungen über das Internet (VoIP). Das System umfasst eine Netzebene mit mindestens einem Registrar (9) und einem Verwaltungsserver (10). Aus der Port-Nummer und der individuellen Kennung des Teilnehmers ermittelt der zugehörige Registrar (9) eine Anschlussadresse und eine Teilnehmeradresse, die gemeinsam an den Verwaltungsserver (10) übertragen werden. Der Verwaltungsserver (10) stellt die zur Anschlussadresse gehörende öffentliche Anschluss-Rufnummer und die zur Teilnehmeradresse gehörende öffentliche Teilnehmer-Rufnummer fest. Der Verwaltungsserver (10) ermittelt einen Verbindungsdatensatz, enthaltend die Anschluss-Rufnummer und die Teilnehmer-Rufnummer, der Dritten wie beispielsweise Abrechnungsgesellschaften, Notrufstellen oder behördlichen Bedarfsträgern zur Verfügung gestellt wird.

## Beschreibung

Die vorliegende Erfindung betrifft ein Verfahren und ein System zur Identifizierung eines registrierten Teilnehmers und des vom Teilnehmer benutzten physikalischen Anschlusses bei der Nutzung von Telekommunikationsverbindungen über das Internet (VoIP).

Herkömmliche Telefongespräche werden über eine Leitung im öffentlichen Telefonnetz (Public Switched Telephon Network, PSTN) übertragen. Es können aber auch Telefongespräche und Telefoniedienste über die Datennetze des Internets übermittelt werden. Sogenannte Multiservice-Switches ermöglichen dabei das nahtlose Zusammenführen herkömmlicher Telefonnetze mit den Datennetzen des Internets und somit den Transport von Daten und Gesprächen über das Netzwerk und den Übergang vom PSTN zum Internet und umgekehrt.

Werden Gespräche über das Internet abgewickelt, spricht man von Internet-Telefonie oder IP-Telefonie, wenn die Übertragung auf dem Internet-Protokoll (IP) basiert. Telefondienste über das Internet werden auch als Voice over IP (VoIP) bezeichnet.

Zur Nutzung der Internet-Telefonie muss sich der Telefonkunde im Internet anmelden. Hierbei wird ihm eine Internet-Adresse, eine sogenannte IP-Adresse (IPv4) zugeordnet. Sie wird vom Internet-Diensteanbieter (Internet Service Provider, ISP) in der Regel dynamisch zur Verfügung gestellt. Die Internet-Adressekann sich somit bei jeder Anmeldung ändern. Der Voice over IP-Nutzer (VoIP-Nutzer) ist also nicht zwangsläufig durch eine Internet-Adresse eindeutig identifizierbar, sondern nur zeitweise über eine zugeordnete Adresse zu erreichen. Die IPv4-Adresse gibt durch ihre dynamische Zuweisung jedoch keinen genauen Aufschluss über den physikalischen Internet-Zugang.

Zusätzlich muss sich der Voice over IP-Nutzer heute beim Telefondiensteanbieter anmelden bzw. authentifizieren. Dies geschieht über eine Zugangskennung und ein Passwort. Dem Voice over IP-Anbieter (VoIP-Anbieter) wird die dynamische Internet-Adresse mitgeteilt, so dass ankommende Gespräche an den VoIP-Nutzer weitergeleitet werden können. Die Nutzung des Internet-Telefons ist also unabhängig vom physikalischen Anschluss an das Internet möglich. Der VoIP-Nutzer kann also mit Hilfe seines IP-fähigen Telefons ein Internet-Telefongespräch von jedem beliebigen Internet-Zugang führen. Welchen physikalischen Anschluss er dabei nutzt ist dem VoIP-Anbieter nicht zwangsläufig bekannt. In der Regel lässt sich der physikalische Anschluss auch nicht ermitteln.

Durch diese Konstellation ergeben sich besondere Fragestellungen bei der Abrechnung von Telekommunikations-Verbindungen, insbesondere von Telefongesprächen, bei der Implementierung von Notruf-Funktionalitäten (Rückverfolgung) und bei der Durchführung von behördlichen Abhörmaßnahmen.

Die Abrechnung der Telefonate erfolgt direkt zwischen dem VoIP-Anbieter und dem Teilnehmer. Es wird zeitbasiert abgerechnet oder pauschal als sogenannte Flat-Rate. Abrechnungen, die auf die Gesprächsentfernung bezogen sind, wie es aus der herkömmlichen Telefonie bekannt ist, können nicht durchgeführt werden, weil der physikalische Anschluss, von dem aus das VoIP-Telefonat geführt wird, nicht zwangsläufig bekannt ist. Der VoIP-Nutzer kann von jedem beliebigen Internet-Zugang aus ein VoIP- Telefonat durchführen.

Grundsätzlich ist der Erbringer öffentlich zugänglicher Telefondienste verpflichtet unentgeltlich Notrufmöglichkeiten und Abhörmaßnahmen bereitzustellen. Bei Telefongesprächen (VoIP-Verbindungen) aus dem Internet muss ein Notruf ebenfalls zur örtlich zuständigen Notrufleitstelle geleitet werden können.

Bei der Durchführung von Abhörmaßnahmen eines behördlichen Bedarfsträgers (sogenannte G 10-Anfragen, lawful interception) muss genau der Anschluss überwacht werden, an dem sich der VoIP-Nutzer gerade in das Internet eingewählt hat.

Aufgabe der vorliegenden Erfindung ist es nun, die oben beschriebenen technischen Probleme bei der Internet-Telefonie zu lösen und ein Verfahren und System vorzuschlagen, bei dem der Teilnehmer einer VoIP-Verbindung und der von ihm verwendete physikalische Internet-Anschluss eindeutig erkannt werden.

Gelöst wird die vorliegende Aufgabe durch ein Verfahren gemäß den Merkmalen des Anspruchs 1. In den Unteransprüchen 2 bis 9 sind bevorzugte Ausführungen des erfindungsgemäßen Verfahrens definiert. Die Aufgabe wird darüber hinaus durch ein System mit dem Merkmalen gemäß Anspruch 10 gelöst. Bevorzugte Weiterbildungen des Systems sind in den Ansprüchen 11 bis 18 angegeben.

Erfindungsgemäß wird bei dem Verfahren zur Identifizierung eines registrierten Teilnehmers und des von ihm benutzten physikalischen Anschlusses bei der Nutzung von Telekommunikationsverbindungen über das Internet die zu dem benutzten Internet-Anschluss gehörende Port-Nummer automatisch an den Registrar übermittelt, der für den Internet-Anschluss zuständig ist. Aus der Port-Nummer wird eine eindeutige geschützte Anschlussadresse ermittelt. Sie ist dem Port direkt zugeordnet. Die Anschlussadresse ist nicht öffentlich zugänglich und dem Teilnehmer oder anderen Teilnehmern nicht bekannt. Die individuelle Kennung des Teilnehmers wird ebenfalls an den Registrar übermittelt, der die zur Kennung gehörige Teilnehmeradresse feststellt. Anschließend werden die Anschlussadresse und die Teilnehmeradresse gemeinsam vom Registrar an einen Verwaltungsserver übertragen.

Da sowohl die Anschlussadresse wie auch die Teilnehmeradresse nicht öffentlich zugänglich sind, kann eine sichere Kommunikation zwischen dem Registrar und dem Verwaltungsserver durchgeführt werden. Es ist Dritten oder anderen Teilnehmern nicht möglich, auf die Anschlussadresse oder die Teilnehmeradresse zuzugreifen.

In einem weiteren Schritt des erfindungsgemäßen Verfahrens wird aus der Anschlussadresse die zugehörige öffentliche Anschluss-Rufnummer ermittelt, aus der Teilnehmeradresse die zugehörige öffentliche Teilnehmer-Rufnummer. Im darauffolgenden Schritt wird im Verwaltungsserver ein Verbindungsdatensatz erzeugt, der die Anschluss-Rufnummer und die Teilnehmer-Rufnummer umfasst. Der Verbindungsdatensatz dient zur Verwendung für Dritte. Er kann beispielsweise an Abrechnungsgesellschaften oder Notrufstellen übermittelt werden. Die Anschluss-Rufnummer und/oder die Teilnehmer-Rufnummer werden auch bei einer Telekommunikationsverbindung zwischen zwei Teilnehmern übertragen.

Die Anschluss-Rufnummer und Teilnehmer-Rufnummer sind in diesem Zusammenhang eine Telefonnummer. In Deutschland ist dafür beispielsweise die Gasse 032 vorgesehen. Es kann jedoch auch jede andere Telefonnummer aus dem Ortsnetz auf einen VoIP-Anschluss geschaltet werden. Die Anschluss-Rufnummer und die Teilnehmer-Rufnummer können aber auch eine URL, eine E-Mail-Adresse oder etwas Ähnliches sein. Selbst eine IP-Adresse könnte als Rufnummer dienen.

Die Anschlussadresse und die Teilnehmeradresse sind jeweils eindeutige Adressen, das heißt, sie sind nur einmal vergeben. Somit lässt sich über die Anschlussadresse direkt auf den benutzten physikalischen Internet-Anschluss zurückschließen. Die Teilnehmeradresse ist direkt an die individuelle Kennung eines Teilnehmers gekoppelt. Der Teilnehmer ist aus der Teilnehmeradresse eindeutig identifizierbar. Es lässt sich also über die eindeutige Anschlussadresse und Teilnehmeradresse genau feststellen, an welchem Anschluss welcher Teilnehmer eine Telekommunikations-Verbindung benutzt. Auf diese Weise können auch sogenannte nomadische Nutzer, die einen fremden Internet-Anschluss benutzen, an dem fremden Anschluss eindeutig erkannt werden. Es ist auch erkennbar, wenn ein Teilnehmer gleichzeitig an mehreren physikalischen Anschlüssen angemeldet ist (sogenanntes Forking). Der Teilnehmer ist dann an mindestens einem Internet-Anschluss als Nomade angemeldet. Ein Nomade lässt sich zum einen dadurch feststellen, dass die Anschlussadresse und die Teilnehmeradresse, die ein Nummernpaar bilden, nicht zusammenpassen. Zum anderen sind im Falle eines nomadischen Teilnehmers an einem physikalischen Anschluss auch die Anschluss-Rufnummer und die Teilnehmer-Rufnummer voneinander verschieden.

Das Verfahren zur Identifizierung des Teilnehmers und des physikalischen Internet-Anschlusses ist nicht auf Telefongespräche, sogenannte Voice over IP-Gespräche, über das Internet beschränkt. Telekommunikationsverbindungen in diesem Sinne können neben der Übertragung von Sprache auch ein Telefax oder eine Video-Konferenz oder Ähnliches sein. Ebenfalls ist eine Konferenzschaltung oder die Übermittlung von Warnsignalen oder Mitteilungen denkbar, beispielsweise in Form von SMS oder als Multimedia-Mitteilung in Form einer MMS oder Ähnliches.

Erfindungsgemäß wird zur Identifizierung eines Teilnehmers und des benutzten Anschlusses ein System verwendet, das eine Netzebene mit wenigstens einem Registrar und einem Verwaltungsserver umfasst. Der Registrar weist eine Registrier-Datenbank auf, in der Port-Nummern von physikalischen Anschlüssen, individuelle Kennungen der Teilnehmer, Anschlussadressen und Teilnehmeradressen abgespeichert sind. Der Registrar hat eine Steuereinheit, die die Zuordnung der Anschlussadresse zur Port-Nummer des benutzten Internet-Anschlusses und der Teilnehmeradresse zur Kennung des Teilnehmers vornimmt. Die Steuereinheit dient auch zur Übermittlung der Teilnehmeradresse und der Anschlussadresse an den Verwaltungsserver. Der Verwaltungsserver weist eine Datenbank auf. Sie umfasst die Teilnehmeradressen, die Anschlussadressen, Anschluss-Rufnummern, Teilnehmer-Rufnummern und Teilnehmer-Daten, wie beispielsweise die postalische Anschrift des Teilnehmers. Der Verwaltungsserver ist eingerichtet, um einen Verbindungs-Datensatz zu erzeugen, der die Anschluss-Rufnummer und die Teilnehmer-Rufnummer enthält. Der Verbindungsdatensatz dient zur Verwendung für Dritte. Er wird beispielsweise an Abrechnungsgesellschaften weitergegeben.

Die Registrierdatenbank des Registrars kann neben der individuellen Kennung des Teilnehmers auch ein dazugehöriges Passwort enthalten, das zur eindeutigen und gesicherten Authentifizierung des Teilnehmers verwendet wird. Aus der Kombination von Teilnehmerkennung und Passwort kann die eindeutige Teilnehmeradresse ermittelt werden. Auch kann der Registrar die dynamisch vergebene Internet-Adresse, eine IPv4-Adresse, kennen. Sie kennzeichnet den momentanen Zugang zum Internet. Diese Information ist notwendig, um ankommende Gespräche für eine bestimmte Anschlussadresse an den zugehörigen Port bzw. physikalischen Internet-Anschluss weiterzuleiten.

Vorzugsweise sind die Teilnehmeradresse und die Anschlussadresse fest zugeordnete eindeutige Adressen auf Basis des Internet-Protokolls. Die beiden Adressen haben die Form einer IP-Adresse der Version 6 oder höher. Bevorzugt werden IPv6-Adressen verwendet, die 128 bit lang sind. Damit steht ein sehr großer Adressraum zur Verfügung, so dass eine Adress-Knappheit ausgeschlossen ist, wie sie bei den heute verwendeten IPv4-Adressen bereits bekannt ist.

Bevorzugt sind in der Teilnehmeradresse und der Anschlussadresse der jeweilige geographische Ursprung codiert. Die Anschlussadresse enthält also einen Hinweis darauf, wo sich der physikalische Internet-Anschluss befindet. In der Teilnehmeradresse ist spezifiziert, mit welcher Anschrift sich der Inhaber der Teilnehmeradresse registriert hat, beispielsweise mit seinem Wohnsitz bzw. seinem Firmensitz. Diese Ortsangabe muss von dem Teilnehmer bei der erstmaligen Registrierung angegeben werden. In der Teilnehmeradresse und der Anschlussadresse kann der geographische Ort durch eine Postleitzahl, einen Ort oder eine Telefonvorwahl, also eine Ortsnetzkennzahl, angegeben sein. Erfindungsgemäß können bei der Verwendung von IPv6-Adressen 24 bit zur weltweiten Verschlüsselung des Landes und des Ortes verwendet werden. Um den gesamten deutschen Ortsnetzkennnummern-Raum abzubilden reichen 13 bit der Adresse aus.

Besonders bevorzugt ist ein Verfahren, bei dem die Kennung eines fremden Teilnehmers am physikalischen Anschluss erkannt wird und aus der fremden Teilnehmerkennung der zugehörige Fremd-Registrar festgestellt wird. Die Kennung des Teilnehmers wird dann an den Fremd-Registrar übermittelt. In einem anschließenden Schritt wird die zur Teilnehmerkennung gehörende Teilnehmeradresse von dem Fremd-Registrar empfangen. Damit ist die Teilnehmer-Adresse, die im Fremd-Registrar hinterlegt ist, dem Registrar des physikalischen Internet-Anschlusses auch bekannt. Besonders einfach lässt sich der Fremd-Registrar dann feststellen, wenn in der individuellen Kennung des Teilnehmers bereits der zuständige Registrar codiert ist.

Benutzt ein nomadisierender Teilnehmer einen physikalischen Internet-Anschluss, so meldet er sich automatisch bei dem zum Anschluss gehörenden Registrar an. Ist der Nomade aber bei einem anderen Registrar registriert, kann der Registrar des physikalischen Anschlusses aus der Kennung des Teilnehmers keine Teilnehmeradresse ermitteln, da er nicht über die notwendigen Informationen verfügt. Die Kennung des Teilnehmers muss also zusätzlich an den zuständigen Fremd-Registrar weitergeleitet werden. Nur der zuständige Fremd-Registrar kann die Teilnehmeradresse ermitteln und an den Registrar des physikalischen Anschlusses weiterleiten.

Korrespondierend wird das Erkennen eines nomadisierenden Teilnehmers an einem physikalischen Internet-Anschluss und die Weiterleitung der Kennung des Teilnehmers an den zugehörigen Fremd-Registrar und der Empfang der zur Kennung gehörenden Teilnehmer-Adresse bevorzugt von der Steuereinheit des Registrars durchgeführt.

In vorteilhafter Weise kann ein fremder Teilnehmer an einem physikalischen Anschluss auch durch Auswertung der Anschlussadresse und der Teilnehmer-Adresse stattfinden. Benutzt ein nomadisierender Teilnehmer einen physikalischen Anschluss, wobei der Teilnehmer und der Anschluss dem selben Registrar zugeordnet sind, kann der Registrar des Anschlusses die Teilnehmeradresse des Teilnehmers ermitteln. Da die Anschlussadresse und die Teilnehmeradresse ein eindeutig zugeordnetes Nummernpaar bilden, kann durch ihre Auswertung und einen entsprechenden Abgleich sofort festgestellt werden, dass ein fremder Teilnehmer einen physikalischen Anschluss benutzt. Ein Erkennen eines fremden Teilnehmers am physikalischen Anschluss kann auch über die Auswertung der zur Anschlussadresse gehörenden Anschluss-Rufnummer und der zur Teilnehmeradresse gehörenden Teilnehmer-Rufnummer durchgeführt werden. Sie sind identisch, wenn ein Teilnehmer seinen heimischen Internet-Anschluss benutzt.

Besonders vorteilhaft erweist sich nach der Erfindung das Ermitteln der zu einer Zieladresse der Telekommunikationsverbindung gehörenden Ziel-Ortsnetznummer, das Ermitteln der zur Anschlussadresse gehörenden Anschluss-Ortsnetznummer und das Ermitteln der Verbindungsdauer der Telekommunikationsverbindung. In einem weiteren Schritt wird ein Datensatz erzeugt, der die Teilnehmeradresse, die Teilnehmer-Rufnummer, die Anschluss-Rufnummer, die Ziel-Ortsnetznummer, die Anschluss-Ortsnetznummer und die Verbindungsdauer umfasst. Der Datensatz enthält alle für eine Abrechnung notwendigen Daten. Auf Grundlage der Daten ist es möglich, eine von der Verbindungsentfernung zwischen der Anschluss-Ortsnetznummer und der Ziel-Ortsnetznummer abhängige Abrechnung durchzuführen. Dies geschieht wie bei der herkömmlichen Telefonie. Die Kosten der Telekommunikationsverbindung können auch in Abhängigkeit der Verbindungsdauer ermittelt werden. Die Abrechnung kann dem durch die Teilnehmeradresse identifizierten Teilnehmer zugeordnet werden. Bei der Benutzung eines fremden Internet-Anschlusses kann die Abrechnung auch dem Nomaden statt dem Anschlussinhaber zugeordnet werden. Die Verbindungsdauer kann auch von einem externen Server zugeführt werden. Der externe Server kann beispielsweise ein AAA-Server, ein Radius-Server oder ein Diameter-Server sein.

Korrespondierend wird erfindungsgemäß die Ermittlung der Ziel-Ortsnummer, der Anschluss-Ortsnetznummer und der Verbindungsdauer sowie das Erzeugen des Datensatzes bevorzugterweise von dem Verwaltungsserver durchgeführt. Der Verwaltungsserver stellt den Datensatz dann Dritten zur Verfügung. Abrechnungsgesellschaften können sich den Datensatz übermitteln lassen oder ihn vom Verwaltungsserver abrufen.

Der Datensatz kann darüber hinaus auch noch weitere Daten enthalten. Es können neben der Teilnehmeradresse und der Teilnehmer-Rufnummer auch andere zur Identifikation des Teilnehmers geeignete Merkmale erfasst werden. Dies sind beispielsweise eine URL, eine E-Mail-Adresse, eine VoIP-Rufnummer oder auch eine anders geartete Adresse. Darüber hinaus können auch die postalische Anschrift und weitere Teilnehmerdaten gespeichert sein. Ebenfalls kann der Datensatz Informationen zum Registrar des physikalischen Anschlusses, zum Registrar des Teilnehmers sowie weitere Fremdnutzungsinformationen (z.B. Roaminginformationen) enthalten. Gleichzeitig ist dann auch der Inhaber des benutzten Anschlusses sowie dessen Registrar bestimmbar. Im Falle eines Missbrauchs des Anschlusses können folglich Fragen der Haftung eindeutig gelöst werden.

Der Datensatz kann auch über detaillierte Informationen des Teilnehmers der Zieladresse verfügen, über den Registrar der Zieladresse und über den Registrar des zur Ziel-Rufnummer gehörenden Teilnehmers sowie weitere Fremdnutzungsinformationen zur Erkennung, dass der Ziel-Teilnehmer als Nomade an einem fremden Anschluss erreicht wird.

Für eine erweiterte Abrechnung kann neben der Verbindungsdauer auch die Startzeit der Telekommunikations-Verbindung sowie das übertragene Datenvolumen ermittelt und zur Verfügung gestellt werden, ebenso Informationen über den "Type of Service", also Kennzeichnungen über die Art der Telekommunikations-Verbindung. Es kann dann aufgeschlüsselt werden, ob die Verbindung eine Sprachverbindung, ein Telefax, eine Video-Datenverbindung oder Ähnliches ist. Zusätzlich können Übertragungsparameter der Verbindung ermittelt und zur Verfügung gestellt werden, sogenannte "Quality of Service"-Parameter (QoS-Parameter) und "Grade of Service"-Parameter (GoS-Parameter). Diese enthalten Informationen über den Codecs, über Bandbreiten und andere spezifische Merkmale der Verbindung. Für eine sehr detaillierte Abrechnung (beispielsweise bei sogenannten Intercarrier-Beziehungen) können darüber hinaus Informationen zur Gateway-Nutzung ermittelt und bereitgestellt werden. Werden für eine Telekommunikationsverbindung und die Übertragung der Daten fremde Netze genutzt, da vorgesehene Gateways kurzzeitig überlastet sind, kann wie in der PSTN-Umgebung die Fremdnutzung der Netze abgerechnet werden. Dies geschieht mit Hilfe sogenannter Intercarrier-Abrechnungen. Dazu ist es wichtig, die Übergänge vom IP-Netz in das PSTN-Netz und umgekehrt zu erkennen und Informationen zu den Übergabepunkten zu generieren.

Besonders bevorzugt wird nach der Erfindung überprüft, ob eine Zieladresse eine Notrufnummer ist. In einem weiteren Schritt wird die zur Anschlussadresse gehörende Anschluss-Ortsnetznummer ermittelt und ein Datensatz erzeugt zur Weiterleitung der Telekommunikations-Verbindung an eine zur Anschluss-Ortsnetznummer gehörende Notrufstelle. In einem weiteren Schritt wird ein Parametersatz erzeugt, der zur Übertragung der Anschluss-Rufnummer an die Notrufstelle geeignet ist. Die zur Anschluss-Rufnummer gehörende postalische Anschrift wird ermittelt und zusätzlich die Teilnehmer-Rufnummer abgespeichert.

Bei einer Telekommunikationsverbindung zu einer Notrufstelle, wird der Anruf durch die Netzwerke (IP und/oder PSTN) an die zuständige Notrufstelle weitergeleitet. Dazu ist es notwendig, den physikalischen Anschluss des Notrufs zu erkennen. Insbesondere bei sogenannten Röchelrufen, bei denen sich der Teilnehmer nach Absetzen des Notrufes nicht mehr meldet, muss erkannt werden, von welchem physikalischen Anschluss der Notruf gestartet wurde. Die zum physikalischen Anschluss gehörende postalische Adresse wird ebenfalls zur Verfügung gestellt. Die Übermittlung der Anschluss-Rufnummer an die Notrufstelle eröffnet die Möglichkeit, dass die Notrufstelle einen Rückruf an den physikalischen Anschluss aussenden kann. Das zusätzliche Abspeichern der Teilnehmer-Rufnummer, der Anschlussadresse und der Teilnehmeradresse erlaubt es, im Falle eines Missbrauchs, den Auslöser des Notrufs eindeutig zu identifizieren. Außerdem sind so auch Nomaden rückrufbar, da bei der Aussendung eines Notrufes die Anschluss-Rufnummer zur Anzeige gebracht wird und nicht zwangsläufig auch die Teilnehmer-Rufnummer des Nomade. Diese wird für den Rückruf zusätzlich gespeichert.

Bevorzugt erkennt der Verwaltungsserver, dass die Zieladresse eine Notrufnummer ist und ermittelt die zur Anschlussadresse des physikalischen Anschlusses gehörende Anschluss-Ortsnetznummer sowie die Anschrift des physikalischen Anschlusses. Der Verwaltungsserver erzeugt Parameter für die Weiterleitung der Telekommunikationsverbindung an die Notrufstelle im Bereich des physikalischen Anschlusses und für die Übertragung der zum physikalischen Anschluss gehörenden Anschluss-Rufnummer an die Notrufstelle. Der Verwaltungsserver könnte auch die Weiterleitung selbst vornehmen.

In einer bevorzugten Weiterbildung des erfindungsgemäßen Systems ist mindestens eine übergeordnete Netzebene vorgesehen, die wenigstens einen Autorisierungsserver umfasst. Der Autorisierungsserver tauscht Daten mit einem oder mehreren Verwaltungsservern aus, wobei die Kommunikation zwischen dem Autorisierungsserver und den Verwaltungsservern ausschließlich über die Anschlussadressen und die Teilnehmeradressen stattfindet. Die Server liegen in einem geschützten Bereich, der nur der Administration vorbehalten ist. Da die Anschlussadressen und die Teilnehmeradressen den Teilnehmern oder Dritten im Internet nicht bekannt sind, können diese Adressen folglich nicht missbraucht oder mutwillig verändert werden. Damit wird ein zusätzlicher Sicherheitsaspekt erreicht.

Vorteilhaft weist der Autorisierungsserver eine Autorisierungs-Datenbank auf in der die Kennung des Teilnehmers, die Teilnehmeradresse und der zur Teilnehmeradresse gehörende Registrar gespeichert sind. Zu den Aufgaben des Autorisierungsserver zählt das für einen Server übliche Rooting. Anfragen von Verwaltungsservern zu einem bestimmten Teilnehmer, der durch seine individuelle Kennung oder die Teilnehmeradresse spezifiziert ist, werden vom Autorisierungsserver weitergeleitet an den zugehörigen Verwaltungsserver bzw. den zugehörigen Registrar, der die Teilnehmeradresse und den Teilnehmer registriert hat. Somit können über den Autorisierungsserver Daten, die beispielsweise zur Abrechnung benötigt werden, vom zuständigen Registrar erfragt und somit zur Verfügung gestellt werden.

Die Aufteilung in mindestens zwei Netzebenen, eine erste Netzebene und eine übergeordnete Netzebene, wird als sogenannte Clearing House Struktur bezeichnet. Sie hat zum einen deutliche Vorteile bei der Aufgabentrennung der einzelnen Server und für den Datenverkehr zwischen dem Autorisierungsserver und den Verwaltungsservern. Der Datenaustausch zwischen den Netzebenen erfolgt verschlüsselt.

Als besonders vorteilhaft gemäß der Erfindung erweist sich bei einer Anfrage eines Bedarfsträgers zu einer Teilnehmeridentifikation, dass ein Bedarfsträger-Datensatz erstellt wird. Als Teilnehmeridentifikation wird der Name eines Teilnehmers, die individuelle Kennung des Teilnehmers, die Teilnehmer-Rufnummer oder die Anschluss-Rufnummer des heimischen physikalischen Anschlusses des Teilnehmers verstanden. Der Bedarfsträger-Datensatz umfasst die Teilnehmeradresse, die Anschlussadresse, die Anschluss-Rufnummer und die Teilnehmer-Rufnummer. Dieser Datensatz wird dem Bedarfsträger zur Verfügung gestellt. Damit erhält der Bedarfsträger alle notwendigen Informationen, um eine Überwachung einer Telekommunikationsverbindung von dem zu überwachenden Teilnehmer durchzuführen. Da der Bedarfsträger sowohl die Teilnehmeradresse und Teilnehmer-Rufnummer wie auch die Anschlussadresse und die Anschluss-Rufnummer kennt, kann er nicht nur Verbindungen überwachen, die der Teilnehmer von seinem heimischen Anschluss aus führt. Im Falle des nomadisierenden Teilnehmers wird eine VoIP-Verbindung ebenfalls erkannt. Es können somit alle Telekommunikationsverbindungen, insbesondere VoIP-Gespräche, erfasst werden, die ein Teilnehmer aufbaut, unabhängig davon, wo sich der Teilnehmer befindet bzw. welchen physikalischen Anschluss er benutzt. Zusätzlich kann auch der heimische Anschluss des Teilnehmers überwacht werden, unabhängig davon, wer diesen physikalischen Anschluss für VoIP-Verbindungen benutzt.

Im Falle einer Bedarfsträgeranfrage wird die Anfrage direkt an den Autorisierungsserver gestellt. Der Bedarfsträger besitzt einen autorisierten Zugang zum Autorisierungsserver. Bevorzugt leitet der Autorisierungsserver die Anfrage des Bedarfsträgers an alle Verwaltungsserver oder an den für die angefragte Anschluss-Rufnummer zuständigen Verwaltungsserver und Registrar weiter. Der Autorisierungsserver stellt somit eine zentrale Anlaufstelle für Anfragen des Bedarfsträgers dar und verteilt diese an die zuständigen Verwaltungsserver.

Vorteilhafterweise erzeugt der Verwaltungsserver beim Erhalt der Anfrage des Bedarfsträgers durch den Autorisierungsserver einen Bedarfsträgerdatensatz. Der Bedarfsträgerdatensatz umfasst die Teilnehmeradresse, die Anschlussadresse, die Teilnehmer-Rufnummer und die Anschluss-Rufnummer. Dieser Datensatz kann vom Verwaltungsserver an den Bedarfsträger übertragen oder dem Bedarfsträger zum Abruf zur Verfügung gestellt werden.

Zur Aktivierung einer Überwachungsmaßnahme wird also der Autorisierungsserver entsprechend beauftragt, der dann je nach Netzsituation den entsprechenden Verwaltungsserver und Registrar voradressiert.

Bevorzugt wird nach der Erfindung die Anfrage des Bedarfsträgers an den Registrar übermittelt, der zu der Teilnehmeradresse des überwachenden Teilnehmers gehört. In einem weiteren Schritt wird der Aufbau einer VoIP-Verbindung zwischen der zu überwachenden Anschlussadresse oder der Teilnehmeradresse und einer Zieladresse festgestellt. Mit dem Verbindungsaufbau wird ein Konferenzdatensatz erzeugt, der zum Aufbau einer Konferenzschaltung zwischen der Anschlussadresse oder der Teilnehmeradresse, je nachdem was überwacht wird, der Zieladresse und dem Bedarfsträger geeignet ist. Der Konferenz-Datensatz enthält Steuerungsparameter, die eine derartige Konferenzschaltung ermöglichen. Der Datensatz wird entweder dem Bedarfsträger selbst zur Verfügung gestellt oder an einen zum Aufbau einer Konferenzschaltung vorgesehenen Server weitergeleitet.

Bevorzugt stellt der zuständige Registrar den Aufbau einer Telekommunikationsverbindung zwischen der zu überwachenden Anschlussadresse und einer Zieladresse fest. Befindet sich der Teilnehmer an seinem heimischen Anschluss, passt die Anschlussadresse zur Teilnehmeradresse. Bei einer nomadischen Nutzung einer VoIP-Verbindung durch den Teilnehmer wird die Verbindung zwischen der Teilnehmeradresse und einer Zieladresse erkannt. Der Registrar erzeugt einen Konferenzdatensatz zum Aufbau einer Konferenzschaltung zwischen der Anschlussadresse bzw. der Teilnehmeradresse, der Zieladresse und dem Bedarfsträger.

Der Konferenzdatensatz wird vom Registrar zur Verfügung gestellt und kann an eine Vermittlungseinheit, eine sogenannte Multipoint Control Unit (MCU) übertragen werden. Die Vermittlungseinheit baut eine Konferenzschaltung zwischen dem Teilnehmer, der Zieladresse und dem Bedarfsträger auf. Damit die Verbindung gesichert aufgebaut werden kann, ist hier eine zentrale Konferenz und nicht eine dezentrale Konferenz als Leistungsmerkmal zu verwenden, damit der Abzuhörende die Überwachung nicht feststellen kann. Die notwendigen Codecs werden schon beim Verbindungsaufbau durch die Vermittlungseinheit MCU als Aufbau einer "stummen" Konferenz ausgehandelt.

Der Bedarfsträger nimmt als passiver Teilnehmer an der Konferenz zwischen dem abzuhörenden Teilnehmer und der Zieladresse teil. Die stumme Konferenz über die Vermittlungseinheit ist eine reine nachrichtentechnische Informationssenke, die am Rande einer Weiche einfach "nur Daten empfängt". Der Bedarfsträger hat die Möglichkeit, die Dateninhalte der VoIP-Verbindung abzuspeichern. Der Bedarfsträger erscheint weder auf einer Rechnung noch auf dem Display der beiden Teilnehmer der Verbindung. Es wird also kein Hinweis auf eine Abhörmaßnahme zu erkennen sein. Eine Änderung der Übertragungs- bzw. Sprachqualität der Telekommunikationsverbindung findet nicht statt.

Eine besondere Ausführungsform wird anhand der nachstehenden Abbildungen näher erläutert. Es zeigen:
- Figur 1: die Anschlusstechnik auf der Teilnehmerseite;
- Figur 2: eine Systemstruktur auf der unteren Netzebene;
- Figur 3: eine Systemstruktur mit einer übergeordneten Netzebene;
- Figur 4: eine Systemstruktur für eine Beauftragung einer Abhörmaßnahme;
- Figur 5: eine Systemstruktur zur Durchführung einer Abhörmaßnahme; und
- Figur 6: ein Ablaufschema zum Erkennen eines registrierten Teilnehmers am benutzten Anschluss.

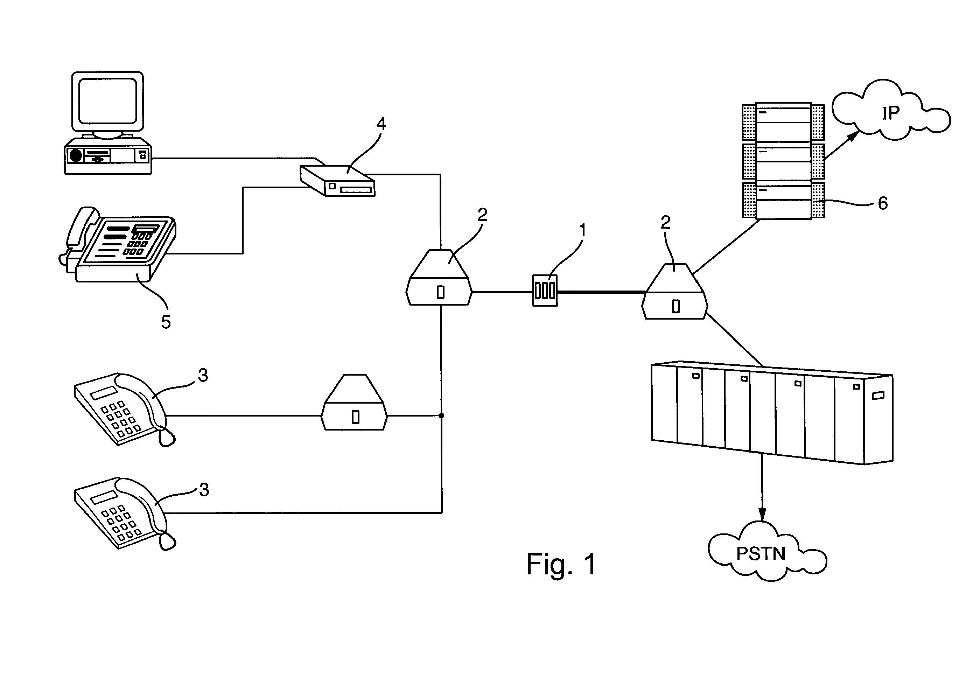

Figur 1 zeigt die Netzzugangstechnologie, wie sie bei der Anwendung von DSL-Netzzugängen typischerweise verwendet wird. Am physikalischen Anschluss 1 ist zunächst ein DSL-Splitter 2 installiert. Bei dem Analoganschluss folgen auf der Teilnehmerseite die analogen Endgeräte 3. Bei dem ISDN-Anschluss ist ein NTBA zwischen dem Endgerät 3 und dem DSL-Splitter 2 eingesetzt. Auf der Datenseite wird ein DSL-Modem 4 installiert. Das DSL-Modem 4 hat einen Router integriert, so dass ein PC und ein VoIP-Telefon 5 gemeinsam angeschlossen werden können. Diese Anschlusstechnologie ist heute vorhanden und kann bei dem erfindungsgemäßen System und Verfahren beibehalten werden. Auf der Netzseite ist ebenfalls ein DSL-Splitter 2 vorhanden, der die Trennung von normaler Telefonie und Datenverkehr vornimmt. Die normalen Telefongespräche werden dem PSTN zugeführt. Der Datenverkehr wird zunächst mit dem Datenverkehr anderer Teilnehmer zusammengeführt. Dies geschieht in einem DSL-Access-Multiplexer (DSLAM) 6.

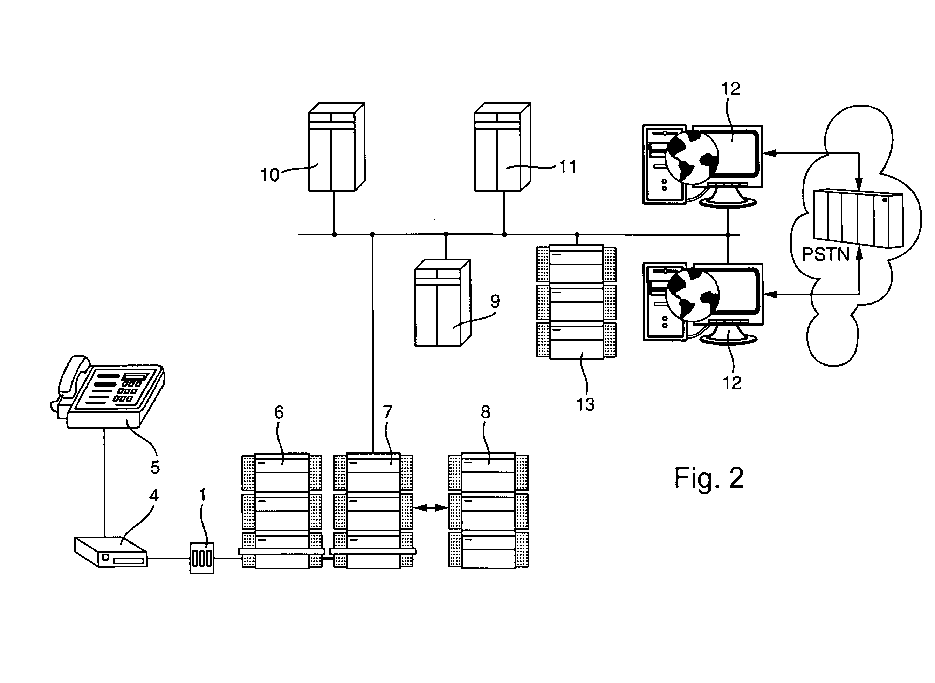

Figur 2 zeigt die Systemstruktur auf der unteren Netzebene. Am physikalischen Anschluss 1 ist das VoIP-Telefon 5 angeschlossen. Der physikalische Anschluss 1 ist mit einem Port am DSLAM 6 verbunden. Über einen Broadband Remote Access Server (BRAS) 7 wird der physikalische Anschluss 1 über den Port des DSLAM 6 verwaltet. Der Anmeldevorgang im Internet erfolgt über einen Radiusserver 8 des Internet-Serviceproviders (ISP). Dem Teilnehmer wird vom Radiusserver 8 eine dynamische Internet-Adresse auf Basis einer IPv4-Adresse zugeteilt. Damit gibt es für TCP/IP-Dienste im Internet eine feste physikalische Portzuordnung vom DSLAM 6 über den BRAS 7 zum Radiusserver 8 für den Netzzugang und die dynamische IPv4-Adresse. Die Anmeldung beim Radiusserver 8 erfolgt durch Übermittlung einer Teilnehmerkennung und eines Passwortes, das vom Radiusserver 8 überprüft wird.

Soll eine VoIP-Verbindung aufgebaut werden, so muss sich der Teilnehmer bei einem Registrar 9 authentifizieren. Dazu wird dem Registrar 9 die Portnummer des Anschlusses 1 sowie die individuelle Kennung des Teilnehmers übermittelt. Der Registrar 9 weist der Portnummer eine feste Anschlussadresse zu. Er ermittelt gleichzeitig die zur Kennung des Teilnehmers zugehörige Teilnehmeradresse. Die Anschlussadresse und die Teilnehmeradresse sind als IPv6-Adressen definiert. Die IPv6-Adressen werden bei der ersten Anmeldung eines Teilnehmers für VoIP-Dienste von dem Registrar 9 fest vergeben. Sie sind unveränderbar, solange der Anschluss besteht bzw. der Teilnehmer als VoIP-Teilnehmer registriert ist. Bei einer Kündigung werden die Adressen wieder frei. Sowohl die Anschlussadresse als auch die Teilnehmeradresse sind auch einem Verwaltungsserver 10 bekannt. Der Verwaltungsserver 10 nimmt die Zuordnung zwischen der Anschlussadresse und einer Anschluss-Rufnummer und der Teilnehmeradresse und einer Teilnehmer-Rufnummer vor. Die beiden Rufnummern entstammen z.B. dem für VoIP-Verbindungen vorgesehenen deutschen 032-Rufnummernraum.

Befindet sich ein Teilnehmer an einem fremden physikalischen Anschluss 1, so kann der zum physikalischen Anschluss 1 gehörende Registrar 9 keine zur individuellen Kennung des Teilnehmers gehörende Teilnehmeradresse ermitteln. In diesem Fall fragt der Registrar 9 über den Verwaltungsserver 10 bei dem zur Teilnehmerkennung gehörenden Fremd-Registrar 11 an und lässt sich von diesem die Teilnehmeradresse zusenden. Damit ist auch der Teilnehmer in einem fremden physikalischen Anschluss 1 eindeutig bestimmt. Verwaltet wird der nomadische Teilnehmer während der Nutzung des fremden Anschlusses 1 jedoch von dem Registrar 9 des Anschlusses 1.

Ein Teilnehmer mit seinem VoIP-Telefon 5 an einem physikalischen Anschluss 1 ist somit eindeutig eindeutig identifiziert über die Anschlussadresse und die Teilnehmeradresse. Da die Einwahl ins Internet über die herkömmliche IPv4-Adressen stattfindet, können alle Geräte und Server auch auf der Netzseite beibehalten werden. Lediglich die Kommunikation zwischen dem Registrar 9, dem Fremd-Registrar 11 und dem Verwaltungsserver 10 findet statt über die Anschlussadresse und die Teilnehmeradresse, also über IPv6-Adressen. Diese IPv6-Adressen sind jedoch nicht öffentlich zugänglich und nur auf dieser Administrationsebene bekannt. Teilnehmer im Internet bzw. VoIP-Datenverkehr können die IPv6-Adressen nicht ermitteln. Sie können deshalb auch nicht von anderen Teilnehmern im Internet verändert oder manipuliert werden. Dies führt zu einer sehr hohen Sicherheit auf der Administrationsebene.

Wird ein Telefongespräch von dem VoIP-Telefon 5 in das öffentliche Telefonnetz PSTN geführt, so wird über den physikalischen Anschluss 1, den DSLAM 6 und dem BRAS 7 das in Datenpakete aufgeteilte Telefonat über den Registrar 9 zu einem Gateway 12 transportiert. Das Gateway 12 stellt die Schnittstelle zwischen dem Internet und dem PSTN dar. Gleichzeitig wird die Teilnehmer-Rufnummer, die dem VoIP-Telefon 5 vom Verwaltungsserver 10 über die Teilnehmeradresse zugeordnet wurde, mit an den Teilnehmer der Zieladresse im PSTN übertragen.

Die Netzstruktur nach Figur 2 umfasst weiterhin eine Multipoint Control Unit (MCU) 13. Die MCU 13 übernimmt die Konferenzsteuerung, wenn Mehrpunktkonferenzen mit drei oder mehreren Teilnehmern über VoIP-Systeme durchgeführt werden. Dies ist auch bei einer behördlichen Überwachungsmaßnahme der Fall, wenn die Überwachungsbehörde passiver Konferenzteilnehmer wird.

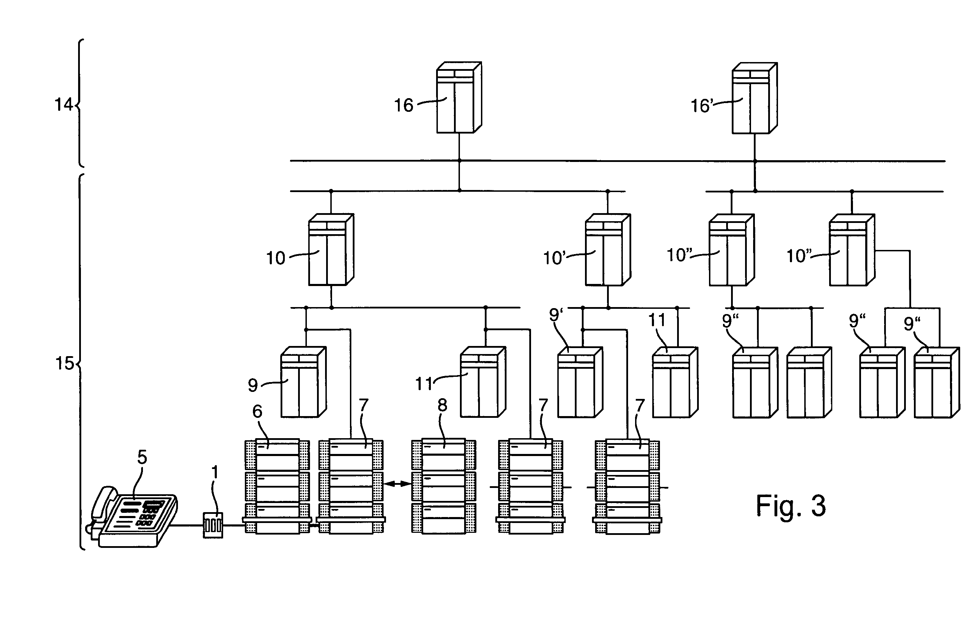

Figur 3 zeigt die gesamte Systemstruktur mit einer oberen Netzebene 14 und einer unteren Netzebene 15. In der oberen Netzebene 14 sind mehrere Autorisierungsserver 16 vorgesehen. Jedem Autorisierungsserver 16 sind Verwaltungsserver 10 der unteren Netzebene 15 zugeordnet. Die unteren Netzebene 15 entspricht der in Figur 2 gezeigten Struktur. Dem Verwaltungsserver 10 sind beispielsweise mehrere Registrare 9 zugeordnet.

Bei einem nomadischen Teilnehmer an einem physikalischen Anschluss muss die Teilnehmeradresse von dem für den Teilnehmer zuständigen Registrar, also den Fremd-Registrar 11 ermittelt werden. Meldet sich ein Teilnehmer mit seinem Vo-IP-Telefon 5 bei einem Registrar 9 an, bei dem er jedoch nicht registriert ist, kann der Registrar 9 die Teilnehmeradresse nicht direkt ermitteln. Der Registrar 9 versucht über den Verwaltungsserver 10 den zum Teilnehmer gehörenden Fremd-Registrar 11 festzustellen. Ist dem Verwaltungsserver 10 der Fremd-Registrar 11 nicht bekannt, so fragt der Verwaltungsserver 10 bei dem übergeordneten Autorisierungsserver 16 an. Der Autorisierungsserver 16 schickt die Anfrage an alle ihm zugeordneten Verwaltungsserver 10'. Ist der Teilnehmer bei einem der den Verwaltungsserver 10' zugeordneten Registraren 9' bekannt, so fragt der Verwaltungsserver 10' den entsprechenden Registrar 9' an und lässt sich von diesem die Teilnehmeradresse zusenden. Die Teilnehmeradresse wird dann über den Autorisierungsserver 16 an den anfragenden Verwaltungsserver 10 weitergeleitet. Der Verwaltungsserver 10 übermittelt schließlich die Teilnehmeradresse an den Registrar 9 des physikalischen Anschlusses 1.

Kann der Autorisierungsserver 16 die Teilnehmeradresse nicht ermitteln, weil keinem der ihm zugeordneten Verwaltungsserver 10' die Adresse bekannt ist, so fragt der Autorisierungsserver 16 bei einem benachbarten Autorisierungsserver 16' an. Der Autorisierungsserver 16' leitet die Anfrage dann an die ihm zugeordneten Verwaltungsserver 10" weiter, bis einem der Verwaltungsserver 10" die zur übermittelten Teilnehmerkennung gehörende Teilnehmeradresse bekannt ist. Dieser Verwaltungsserver 10" lässt sich von dem Registrar 9" die Teilnehmeradresse zu senden zur Weiterleitung an den Autorisierungsserver 16.

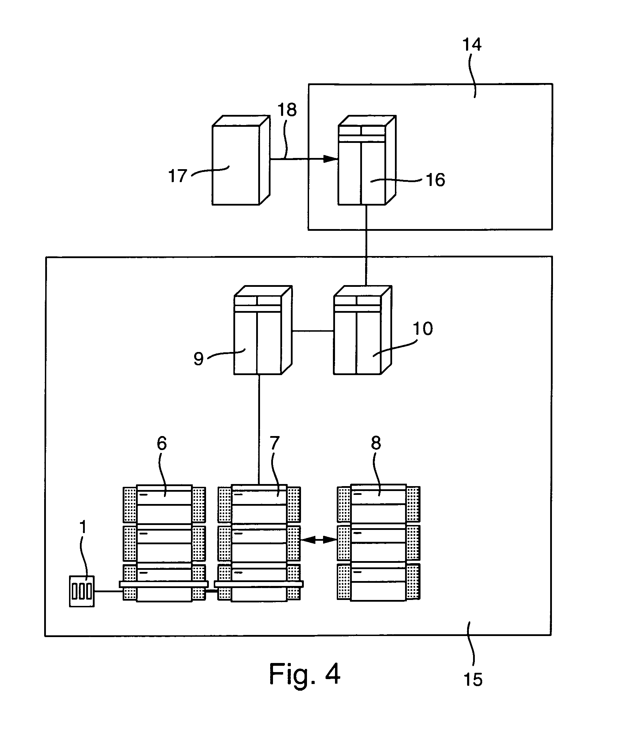

Figur 4 zeigt die Systemstruktur bei der Vorbereitung einer Teilnehmerüberwachung durch einen behördlichen Bedarfsträgers 17. Der Bedarfsträger 17 hat einen autorisierten Zugang zum Autorisierungsserver 16 der oberen Netzebene 14. Der Bedarfsträger 17 setzt eine Anfrage 18 zu einem Teilnehmer an den Autorisierungsserver 16 ab, welcher die Anfrage 18 direkt an den Verwaltungsserver 10 der unteren Netzebene 15 weiterleitet.

Bei der Anfrage 18 des Bedarfsträgers 17 müssen zunächst die notwendigen Datensätze für den Bedarfsträger 17 ergänzt werden insofern der Bedarfsträger 17 noch nicht über alle notwendigen Informationen zur kompletten Überwachung eines Anschlusses 1 verfügt. Zur kompletten Überwachung auf der netztechnischen Ebene benötigt der Bedarfsträger 17 die Anschlussadresse und Teilnehmeradresse und zur Einleitung oder Fortsetzung der Überwachungsmaßnahme im PSTN auch die Anschluss-Rufnummer bzw. die Teilnehmer-Rufnummer, die beispielsweise dem deutschen 032-Rufnummernraum entstammen. Die Kommunikation zwischen dem Autorisierungsserver 16, dem Verwaltungsserver 10 und dem Bedarfsträger 17 erfolgt verschlüsselt auf Basis des IPv6-Protokolls.

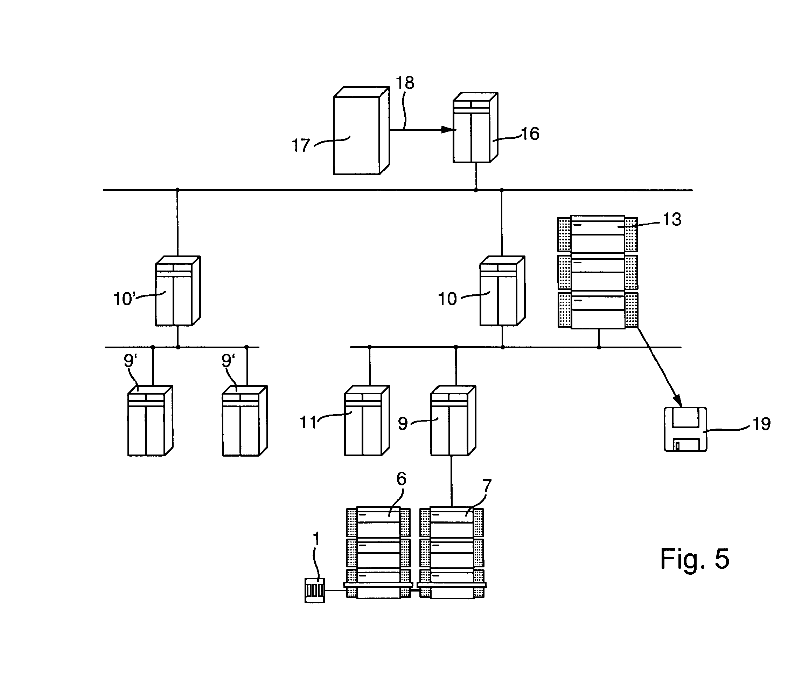

Figur 5 zeigt das Beispiel, bei dem der Bedarfsträger 17 die Überwachung einer Teilnehmer-Rufnummer aus dem deutschen 032-Rufnummernraum anordnet. Die Anfrage wird an den Autorisierungsserver 16 gestellt, der die Anfrage 18 an die Verwaltungsserver 10, 10' weiterleitet. Der Verwaltungsserver 10 bestimmt die zu der Teilnehmer-Rufnummer gehörenden Daten und liefert die Anschlussadresse des physikalischen Anschlusses 1, die Anschluss-Ortsnetznummer und die Teilnehmeradresse zurück. Die Daten werden vom Verwaltungsserver 10 über den Autorisierungsserver 16 an den Bedarfsträger 17 gesendet.

Entscheidet sich der Bedarfsträger 17 mit den vorhandenen Daten eine Abhörmaßnahme durchführen zu lassen, so werden die beiden gewonnenen IPv6-Adressen, nämlich die Teilnehmeradresse und die Anschlussadresse, an den Registrar 9 des Anschlusses 1 zur Überwachung übermittelt.

Bei der Ausdehnung der Überwachungsmaßnahme auch auf nomadische Teilnehmer müssen auch die anderen im Netz befindlichen Verwaltungsserver 10' und Registrare 9', bei denen eine Nomadisierung möglich ist, mitüberwacht werden. Die Anschlussadresse und die Teilnehmeradresse werden an den Registrar 9 des zur Anschlussadresse gehörenden Anschlusses 1 übermittelt. Somit kann der Anschluss 1 direkt überwacht werden und gleichzeitig der Teilnehmer, falls er seinen heimischen Anschluss 1 benutzt. Die Teilnehmeradresse wird zusätzlich an den Fremd-Registrar 11 und an alle anderen Registrare 9' und Verwaltungsserver 10' übermittelt, bei denen Voice over IP möglich ist.

Bei der Aktivierung einer Überwachungsmaßnahme sendet der Bedarfsträger 17 den Datensatz mit den Überwachungsinformationen gemeinsam mit der Anfrage 18 an den Verwaltungsserver 10, der zu dem zu überwachenden physikalischen Anschluss 1 gehört. Der Verwaltungsserver 10 leitet die Anfrage 18 des Bedarfsträgers 17 an den zuständigen Registrar 9 weiter. Wird eine Telekommunikationsverbindung von dem zu überwachenden Anschluss 1 aufgebaut, so registriert sich der Teilnehmer am physikalischen Anschluss 1 bei dem zuständigen Registrar 9. Daraufhin wird vom Registrar 9 ein Konferenzdatensatz erzeugt, der direkt oder über den Verwaltungsserver 10 der MCU 13 zugesandt wird. Die MCU 13 baut sofort eine stumme Konferenz auf zwischen dem Teilnehmer am physikalischen Anschluss 1, dem Zielteilnehmer der VoIP-Verbindung und dem Bedarfsträger 17. Die Daten der Telekommunikationsverbindung werden entweder von der MCU 13 oder vom Bedarfsträger 17 selbst auf ein Speichermedium 19 gespeichert. Der Bedarfsträger 17 nimmt dann die Aufzeichnung und Archivierung der Gesprächsinhalte bzw. Verbindungsinhalte zur weiteren Auswertung und Verarbeitung vor.

Damit die Konferenzverbindung gesichert aufgebaut werden kann, ist hier eine zentrale Multipoint-Konferenz zu verwenden, damit der Teilnehmer am physikalischen Anschluss 1 und sein Gesprächspartner die Abhörmaßnahme nicht feststellen. Die notwendigen Codecs werden beim Verbindungsaufbau bereits durch die MCU 13 als Aufbau einer stummen Konferenz ausgehandelt.

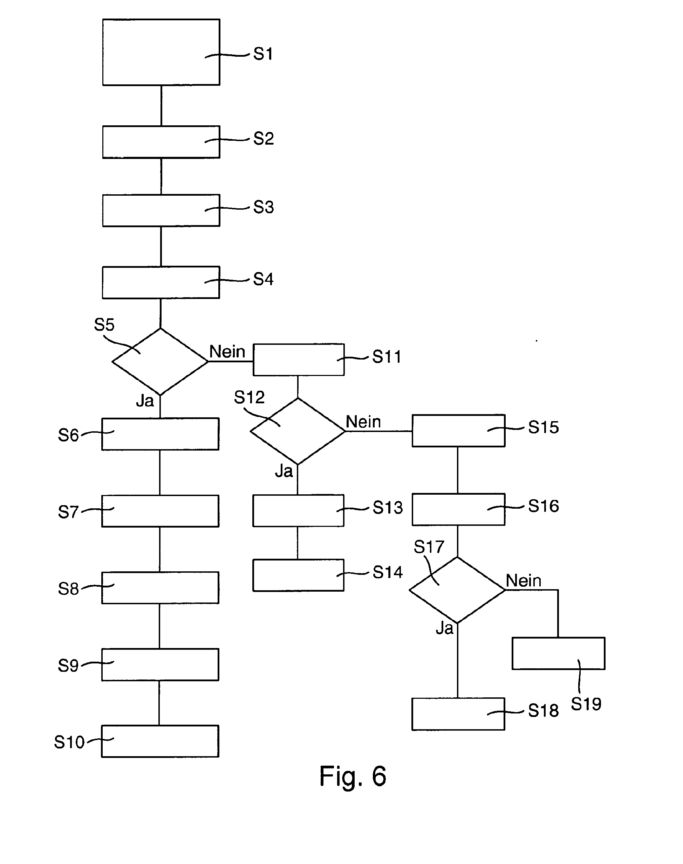

Figur 6 zeigt das Ablaufschema zur Identifizierung eines Teilnehmers an einem Internet-Anschluss im Detail. In einem ersten Schritt S 1 meldet sich der Teilnehmer bei seinem Internet-Serviceprovider (ISP) für den Zugang zum Internet an. Dazu übermittelt er seine individuelle Kennung. Dabei wird auch die Portnummer des physikalischen Anschlusses 1 an den Radiusserver 8 des ISP übertragen. Zusätzlich zur Kennung wird ein Passwort zur Identifizierung des Teilnehmers übermittelt.

In einem zweiten Schritt S 2 stellt der Radiusserver 8 eine IPv4-Adresse als Zugangsadresse für den Datenzugang zum Internet zur Verfügung.

Sobald der Teilnehmer ein VoIP-Telefon 5 an seinem physikalischen Anschluss 1 anschließt, wird in einem nächsten Schritt S 3 die Portnummer des physikalischen Anschlusses 1 an den Registrar 9 übermittelt. Der Registrar 9 ermittelt aus der Portnummer die zugehörige Anschlussadresse.

In einem weiteren Schritt S 4 wird nun die Kennung des Teilnehmers an den Registrar 9 übermittelt. Der Registrar 9 prüft im nächsten Schritt S 5, ob die Kennung bekannt ist. Die Kennung ist dem Registrar 9 immer dann bekannt, wenn sich der Teilnehmer am heimischen Anschluss 1 mit seinem VoIP-Telefon 5 anmeldet.

Im Falle der heimischen Nutzung des physikalischen Anschlusses 1 für eine Vo-IP-Verbindung folgen in Weiteren die Schritte S 6 bis S 10. Der Registrar 9 ermittelt aus der bekannten Kennung die Teilnehmeradresse. Die Anschlussadresse und die Teilnehmeradresse werden vom Registrar 9 gemeinsam in einem siebten Schritt S 7 an den Verwaltungsserver 10 übertragen.

In einem nachfolgenden Schritt S 8 ermittelt der Verwaltungsserver 10 aus der Anschlussadresse die Anschluss-Rufnummer und aus der Teilnehmeradresse die Teilnehmer-Rufnummer. Die beiden Rufnummern sind öffentlich zugängliche Rufnummern und werden Dritten zur Verfügung gestellt. Im Schritt S 9 erzeugt der Verwaltungsserver 10 einen Verbindungsdatensatz, der die öffentlich zugängliche Anschluss-Rufnummer und Teilnehmer-Rufnummer umfasst. In einem abschließenden zehnten Schritt S 10 wird der Datensatz einer Abrechnungsgesellschaft zur Verfügung gestellt.

Bei einer nomadischen Nutzung des Anschlusses 1 ist dem Registrar 9 die Kennung des Teilnehmers nicht bekannt. In diesem Fall sendet der Registrar 9 in einem Schritt S 11 eine Anfrage an den Verwaltungsserver 10 zur Ermittlung der Teilnehmeradresse, die der Kennung zugeordnet ist.

Kennt der Verwaltungsserver 10 die Kennung (Schritt S 12), so leitet er die Anfrage des Registrars 9 an den zur Kennung gehörenden Fremd-Registrar 11 in einem weiteren Schritt S 13 weiter.

Der Fremd-Registrar 11 ermittelt die zur Kennung gehörende Teilnehmeradresse im Schritt S 14 und übermittelt die Teilnehmeradresse über den Verwaltungsserver 10 an den anfragenden Registrar 9. Damit stehen dem Registrar 9 nun die Anschlussadresse und die Teilnehmeradresse zur Verfügung.

Wird im Schritt S 12 festgestellt, dass dem Verwaltungsserver 10 die Kennung unbekannt ist, leitet er die Anfrage an den übergeordneten Autorisierungsserver 16 in einem Schritt S 15 weiter.

Der Autorisierungsserver 16 übermittelt nun in einem nächsten Schritt S 16 die Anfrage an alle ihm zugeordneten Verwaltungsserver 10'. In einem nächsten Schritt S 17 wird festgestellt, ob die Kennung einem der Verwaltungsserver 10' bekannt ist. Ist dies der Fall, so wird in einem Schritt S 18 die Anfrage an den zuständigen Verwaltungsserver 10' und schließlich an den zugeordneten Registrar 9' übermittelt. Dies erfolgt korrespondierend zu den Schritten S 12 bis S 14.

Ist keinem der Verwaltungsserver 10' die Kennung bekannt, so übergibt der Autorisierungsserver 16 die Anfrage an weitere Autorisierungsserver 16'. Dies geschieht in einem Schritt S 19. Die sich hieran anschließende Prozedur zur Ermittlung der Teilnehmeradresse eines nomadisierenden Teilnehmers entspricht den Schritten S 15 bis S 18. Auf diese Weise kann immer, auch bei einem nomadisierenden Teilnehmer, die zur Kennung gehörende Teilnehmeradresse von dem zuständigen Registrar 9, 9' bzw. dem Fremd-Registrar 11 ermittelt werden und ist schließlich dem Registrar 9 des physikalischen Anschlusses 1 bekannt.

Handelt es sich um eine unbekannte Kennung, d.h. der Teilnehmer konnte nicht authentifiziert werden (z.B. falscher Teilnehmer oder Passwort, Registrar unbekannt oder nicht erreichbar), erhält der Teilnehmer keinen Zugang zum VoIP (VoIP Connect nicht möglich). Die Anmeldung des Teilnehmers wird abgewiesen.

### Zusammenstellung der Bezugszeichen

- 1: Anschluss
- 2: DSL-Splitter
- 3: Endgerät
- 4: DSL-Modem
- 5: VoIP-Telefon
- 6: DSLAM
- 7: BRAS
- 8: Radiusserver
- 9, 9', 9": Registrar
- 10, 10', 10": Verwaltungsserver
- 11: Fremd-Registrar
- 12: Gateway
- 13: MCU
- 14: obere Netzebene
- 15: untere Netzebene
- 16, 16': Authorisierungsserver
- 17: Bedarfsträger
- 18: Anfrage
- 19: Speichermedium

## Patentansprüche

1. Verfahren zur Identifizierung eines registrierten Teilnehmers und des vom Teilnehmer benutzten physikalischen Anschlusses bei der Nutzung von Telekommunikations-Verbindungen über das Internet (VoIP)
**gekennzeichnet durch** die folgenden Schritte:
- Automatisches Übermitteln der zum benutzten Anschluss (1) gehörenden Port-Nummer an den zugehörigen Registrar (9),
- Automatisches Übermitteln der individuellen Kennung des Teilnehmers an den zugehörigen Registrar (9),
- Ermitteln der zur Port-Nummer gehörenden geschützten Anschlussadresse,
- Ermitteln der zur Kennung des Teilnehmers gehörigen geschützten Teilnehmeradresse,
- Gemeinsame Übertragung der Anschlussadresse und der Teilnehmeradresse vom Registrar (9) an einen Verwaltungsserver (10),
- Ermitteln der zur Anschlussadresse gehörenden öffentlichen Anschluss-Rufnummer,
- Ermitteln der zur Teilnehmeradresse gehörenden öffentlichen Teilnehmer-Rufnummer,
- Erzeugen eines Verbindungs-Datensatzes im Verwaltungsserver (10) enthaltend die Anschluss-Rufnummer und die Teilnehmer-Rufnummer zur Verwendung für Dritte.

2. Verfahren nach Anspruch 1, **dadurch gekennzeichnet , dass** die Teilnehmeradresse und die Anschlussadresse festzugeordnete eindeutige Adressen auf Basis des Internetprotokolls sind.

3. Verfahren nach Anspruch 2, **dadurch gekennzeichnet , dass** in der Teilnehmeradresse und der Anschlussadresse der jeweilige geographische Ursprung kodiert ist.

4. Verfahren nach einem der Ansprüche 1 bis 3, **gekennzeichnet durch** die Schritte:
- Erkennen der Kennung eines fremden Teilnehmers am benutzten Anschluss (1),
- Feststellen des zur Kennung des fremden Teilnehmers gehörenden Fremd-Registrars (11),
- Übermitteln der Kennung des fremden Teilnehmers an den zugehörigen Fremd-Registrar (11), und
- Empfangen der zur Kennung des fremden Teilnehmers gehörenden Teilnehmeradresse vom zugehörigen Fremd-Registrar (11).

5. Verfahren nach einem der Ansprüche 1 bis 4, **gekennzeichnet durch** Erkennen eines fremden Teilnehmers am Anschluss (1) **durch** Auswertung der Anschlussadresse und der Teilnehmeradresse.

6. Verfahren nach einem der Ansprüche 1 bis 5, **gekennzeichnet durch** die Schritte:
- Ermitteln der zu einer Zieladresse gehörenden Ziel-Ortsnetznummer,
- Ermitteln der zur Anschlussadresse gehörenden Anschluss-Ortnetznummer,
- Ermitteln der Verbindungsdauer des Gesprächs,
- Erzeugen eines Datensatzes, umfassend die Teilnehmeradresse, die Teilnehmer-Rufnummer, die Anschluss-Rufnummer, die Ziel-Ortsnetznummer, die Anschluss-Ortsnetznummer und die Verbindungsdauer.

7. Verfahren nach einem der Ansprüche 1 bis 6, **gekennzeichnet durch** die Schritte:
- Überprüfen, ob eine Zieladresse eine Notrufnummer ist,
- Ermitteln der zur Anschlussadresse gehörenden Anschluss-Ortsnetznummer,
- Erzeugen eines Datensatzes zur Weiterleitung des Gesprächs an eine zur Anschluss-Ortsnetznummer gehörenden Notrufstelle,
- Bereitstellen eines Parametersatzes zum Übertragen der Anschluss-Rufnummer an die Notrufstelle,
- Ermitteln und zur Verfügung stellen der zur Anschluss-Rufnummer gehörenden Anschrift, und
- Abspeichern der Teilnehmer-Rufnummer.

8. Verfahren nach einem der Ansprüche 1 bis 7, **dadurch gekennzeichnet, dass** bei einer Anfrage (18) eines Bedarfsträgers (17) zu einer Teilnehmer-Identifikation ein Bedarfsträger-Datensatz erstellt wird, umfassend die Teilnehmeradresse, die Anschlussadresse, die Anschluss-Rufnummer, die Teilnehmer-Rufnummer, und
der Bedarfsträger-Datensatz dem Bedarfsträger (17) zur Verfügung gestellt wird.

9. Verfahren nach Anspruch 8, **gekennzeichnet durch** die Schritte:
- Übermittlung der Anfrage (18) des Bedarfsträgers (17) an den zur Teilnehmeradresse gehörenden Registrar (9),
- Feststellen des Aufbaus einer Telekommunikations-Verbindung zwischen der zu überwachenden Anschlussadresse oder Teilnehmeradresse und einer Zieladresse,
- Erzeugen eines Konferenz-Datensatzes zum Aufbau einer Konferenzschaltung zwischen der Anschlussadresse oder der Teilnehmeradresse, der Zieladresse und dem Bedarfsträger (17).

10. System zur Identifizierung eines registrierten Teilnehmers und des vom Teilnehmer benutzten physikalischen Anschlusses (1) bei der Nutzung von Telekommunikations-Verbindungen über das Internet (VoIP) umfassend eine Netzebene mit wenigstens einen Registrar (9) und einem Verwaltungsserver (10),
**dadurch gekennzeichnet, dass**
- der Registrar (9) eine Registrierdatenbank aufweist, in der die Port-Nummern der physikalischen Anschlüsse (1), die individuellen Kennungen der Teilnehmer, Teilnehmeradressen und Anschlussadressen abgespeichert sind;
- der Registrar (9) eine Steuereinheit aufweist, die eingerichtet ist
zum Zuordnen der Anschlussadresse zur Port-Nummer des benutzten Anschlusses (1), zum Zuordnen der Teilnehmeradresse zur Kennung des Teilnehmers und zur Übermittlung der Teilnehmeradresse und der Anschlussadresse an den Verwaltungsserver (10);
- der Verwaltungsserver (10) eine Datenbank hat, in der die Teilnehmeradressen, die Anschlussadressen, Anschluss-Rufnummern, Teilnehmer-Rufnummern und Teilnehmerdaten gespeichert sind; und
- der Verwaltungsserver (10) eingerichtet ist zum Erzeugen eines Verbindungs-Datensatzes enthaltend die Anschluss-Rufnummer und die Teilnehmer-Rufnummer zur Verwendung für Dritte.

11. System nach Anspruch 10, **dadurch gekennzeichnet , dass** die Steuereinheit des Registrars (9) eingerichtet ist
- zum Erkennen, dass ein fremder Teilnehmer am Anschluss (1) angemeldet ist,
- zum Senden der Kennung des fremden Teilnehmers an den zugehöigen Fremd-Registrar (11), und
- zum Empfangen der Teilnehmeradresse des fremden Teilnehmers vom Fremd-Registrar (11).

12. System nach einem Anspruch 10 oder 11, **dadurch gekennzeichnet , dass** der Verwaltungsserver (10) eingerichtet ist
- zur Ermittlung der zu einer Zieladresse gehörenden Ziel-Ortsnetznummer und der zur Anschlussadresse gehörenden Anschluss-Ortsnetznummer,
- zur Ermittlung einer Verbindungsdauer, und
- zum Erzeugen eines Datensatzes, umfassend die Teilnehmeradresse, die Teilnehmer-Rufnummer, die Ziel-Ortsnetznummer, die Anschluss-Ortsnetznummer und die Verbindungsdauer.

13. System nach einem der Ansprüche 10 bis 12, **dadurch gekennzeichnet , dass** der Verwaltungsserver (10) eingerichtet ist
- zum Erkennen, dass die Zieladresse der Telekommunikations-Verbindung eine Notrufnummer ist,
- zum Ermitteln der zur Anschlussadresse gehörenden Anschluss-Ortsnetznummer und Anschrift, und
- zum Erzeugen von Parametern für die Weiterleitung der Telekommunikations-Verbindung an eine Notrufstelle im Bereich der Anschluss-Ortsnetznummer, für die Übertragung der Anschluss-Rufnummer an die Notrufstelle und für das Abspeichern der Teilnehmer-Rufnummer in einer Speichereinheit.

14. System nach einem der Ansprüche 10 bis 13, **dadurch gekennzeichnet, dass** eine übergeordnete Netzebene (14) vorgesehen ist, die wenigstens einen Autorisierungs-Server (16) umfasst, der Daten mit einem oder mehreren Verwaltungsservern (10) austauscht, wobei die Kommunikation ausschließlich über die Anschlussadressen und Teilnehmeradressen stattfindet.

15. System nach Anspruch 14, **dadurch gekennzeichnet , dass** der Autorisierungs-Server (16) eine Autorisierungs-Datenbank aufweist, in der die Kennung des Teilnehmers, die Teilnehmeradresse und der zur Teilnehmeradresse gehörende Registrar (9) gespeichert sind.

16. System nach Anspruch 14 oder 15, **dadurch gekennzeichnet , dass** bei Erhalt einer Anfrage (18) eines Bedarfsträgers (17) der Autorisierungs-Server (16) die Anfrage an alle Verwaltungsserver (10, 10') oder an den für die angefragte Anschluss-Rufnummer zuständigen Verwaltungsserver (10) und Registrar (9) weiterleitet.

17. System nach Anspruch 16, **dadurch gekennzeichnet , dass** bei Erhalt der Anfrage (18) des Bedarfsträgers (17) der Verwaltungsserver (10) einen Bedarfsträger-Datensatz erzeugt, umfassend die Teilnehmeradresse, die Anschlussadresse, die Teilnehmer-Rufnummer und die Anschluss-Rufnummer, zur Übertragung an den Bedarfsträger (17).

18. System nach Anspruch 17, **dadurch gekennzeichnet, dass** der zuständige Registrar (9) eingerichtet ist zum Feststellen des Aufbaus einer Telekommunikations-Verbindung zwischen der zu überwachenden Anschlussadresse oder Teilnehmeradresse und einer Zieladresse und zum Erzeugen eines Konferenz-Datensatzes zum Aufbau einer Konferenzschaltung zwischen der Anschlussadresse oder der Teilnehmeradresse, der Zieladresse und dem Bedarfsträger (17).
